# EUROPÄISCHE PATENTSCHRIFT

(11) **EP 2 995 749 B1**
(45) Veröffentlichungstag und Bekanntmachung des Hinweises auf die Patenterteilung: **08.06.2022**
(21) Anmeldenummer: 14184280.7
(22) Anmeldetag: 10.09.2014
(51) Int. Cl.: E04G 11/28, B66F 1/08, E04G 21/32, F16C 7/04, F16F 15/067

(54) **VERFAHREN UND VORRICHTUNG ZUM ABSENKEN EINES SCHALUNGS- ODER SCHUTZELEMENTS**
METHOD AND APPARATUS FOR LOWERING A FORMWORK OR A PROTECTIVE ELEMENT
PROCÉDÉ ET DISPOSITIF POUR ABAISSER UN ÉLÉMENT DE COFFRAGE OU DE PROTECTION

(43) Veröffentlichungstag der Anmeldung: 16.03.2016
(73) Patentinhaber: DOKA GmbH, 3300 Amstetten (AT)
(72) Erfinder:
(74) Vertreter: SONN Patentanwälte OG

(56) Entgegenhaltungen:
- KR-B1- 100 704 720
- US-A- 3 784 195

## Beschreibung

Die Erfindung betrifft ein Verfahren gemäß dem Oberbegriff von Anspruch 1. Weiters betrifft die Erfindung eine Vorrichtung gemäß dem Oberbegriff von Anspruch 8.

Die KR 100 704 720 offenbart eine Kletterschalung mit Trägern, welche hakenförmige Eingriffselemente aufweisen. Zum Aufwärtsklettern ist ein hydraulischer Zylinder-Kolben-Antrieb vorgesehen. Beim Einfahren des Kolbens wird der Haken durch die Hakenvorsprünge des Trägers gegen den Uhrzeigersinn verschwenkt. Zur Halterung des Trägers in einer vorgegebenen Höhenposition ist am Geschoßboden ein Kletterschuh mit einem Schwenkhaken angebracht. Der Kletterschuh hat die Funktion, das Anheben des Trägers aus einer Ausgangsstellung in eine angehobene Stellung zu ermöglichen.

Bei der Bearbeitung, d.h. Errichtung, Abtragung, Veränderung von insbesondere mehrgeschossigen Gebäuden ist es auf dem Gebiet des Bauwesens bekannt, sog. Klettersysteme einzusetzen. Diese Klettersysteme umfassen Schalungs- oder Schutzelemente, die bei der Erstellung von Wänden, Decken bzw. Säulen des Gebäudes eingesetzt werden oder sie dienen zum Schutz des mit der Bearbeitung des Gebäudes beschäftigten Personals. Nachdem eine Geschossebene fertig bearbeitet wurde, werden bei den bekannten Klettersystemen die Schutz- oder Schalungselemente mit einem Hubantrieb oder einem Kran über geeignete Profile in einen darüber liegenden Arbeitsbereich gehoben. Derartige Klettersysteme sind insbesondere als Selbstklettersysteme ausführt, bei welchen während des Hebens keine manuellen Hilfstätigkeiten erforderlich sind.

Insbesondere im Zusammenhang mit der Abtragung von Gebäuden, der Gebäudesanierung bzw. Demontage von Bauten besteht jedoch der Bedarf, die Schutz- oder Schalungselemente nicht nach oben klettern zu lassen, sondern vielmehr diese Elemente nach unten in Richtung Boden abzusenken, d.h. nach unten klettern zu lassen.

Grundsätzlich ist es bekannt, bestehende Klettersysteme, wie sie z.B. in der WO 2004/020766 A oder der WO 2007/036300 A1 beschrieben sind, mit erheblichem Personal- und Zeitaufwand nach unten Richtung Boden abzusenken. Bei den bekannten Klettersystemen werden allerdings Führungs- und Haltevorrichtungen eingesetzt werden, welche ein Anheben bzw. ein Klettern der Schalungs- und Schutzelemente nach oben hin zulassen und ein ungewolltes Absinken nach unten automatisch verhindern.

Hierzu werden z.B. Führungs- und Haltevorrichtungen, auch Kletterschuhe genannt, wie sie beispielsweise in der WO 2007/141264 A1 offenbart sind, eingesetzt, denen eine derartige Bewegungszulässigkeit in eine Richtung, nämlich nach oben hin, innewohnt, und welche automatisch eine Halte- bzw. Sperrfunktion für Bewegungen der Träger nach unten entfalten. Demnach ist es bei diesen bekannten Klettersystemen bisher erforderlich, dass während des Absenkens der Träger bzw. der Schalungs- oder Schutzelemente die Führungs- und Haltevorrichtungen manuell deaktiviert werden. Für diese manuelle Deaktivierung der Führungs- und Haltevorrichtungen ist nachteiligerweise ein erheblicher Arbeits- und Zeitaufwand erforderlich.

Auch aus der EP 1 698 746 B ist bereits ein Verfahren zum Absenken von Schalungs- und Schutzelementen bekannt, bei welchem Halteelemente vorgesehen sind, die beim Absenken der Träger über einen Griff manuell in eine inaktive Stellung überführt werden müssen, um ein Absenken der Träger zu ermöglichen.

Die US 3,784,195 A beschreibt ein andersartiges Trainingsgerät.

Ziel der vorliegenden Erfindung ist demzufolge ein Verfahren bzw. eine Vorrichtung zu schaffen, mit welcher ein Kletterverfahren bzw. -system geschaffen wird, welches vergleichbar mit bekannten Selbstklettersystemen, bei welchen ohne manuellen Zugriffen ein automatisches Anheben der Schalungs- und Schutzelemente möglich ist, ein Absenken bzw. ein nach unten Klettern von Schalungs- und Schutzelementen bei der Bearbeitung von Gebäuden erzielt werden kann. Zudem soll auch eine Zug-/Druckstange geschaffen werden, welche als Steuervorrichtung bei dem erfindungsgemäßen Verfahren und der erfindungsgemäßen Vorrichtung eingesetzt werden kann.

Diese Aufgabe wird durch ein Verfahren mit den Merkmalen von Anspruch 1 und eine Vorrichtung mit den Merkmalen von Anspruch 8 gelöst.

Erfindungsgemäß wird bei dem Verfahren der Träger aus einer Ausgangsposition, in welcher das Halteelement mit einem ersten Eingriffselement des Trägers in Eingriff steht, im Wesentlichen in vertikaler Richtung gehoben, wobei während des Hebens das Halteelement mittels einer Steuervorrichtung vorübergehend in eine inaktive Stellung bewegt wird, in welcher der Träger über seine Ausgangsposition hinaus abgesenkt wird, und das Halteelement sodann mittels der Steuervorrichtung in eine aktive Stellung zurückbewegt wird, so dass beim Absenken ein zweites Eingriffselement des Trägers mit dem Halteelement der Aufnahmeeinheit in Eingriff gelangt.

Bei dem erfindungsgemäßen Verfahren wird somit der Träger zunächst aus einer zuvor gegebenen Eingriffstellung mit einem Halteelement der am Gebäude befestigten Führungs- und Haltevorrichtung gehoben, wodurch mit Hilfe einer Steuervorrichtung das Halteelement - ohne manuellen Eingriff beim Heben/Senken - automatisch in eine inaktive Stellung überführt wird. Während die Steuervorrichtung somit das Halteelement in der inaktiven Stellung hält, kann der Träger in eine gegenüber der Ausgangsposition abgesenkte Stellung nach unten bewegt werden. Hierbei ist es jedoch erforderlich, dass die Steuervorrichtung sodann - wiederum ohne manuellen Eingriff - das Halteelement in eine aktive Stellung zurückbewegt, so dass der Träger samt Schalungs- oder Schutzelement in einer abgesenkten Stellung in Verbindung mit dem zu bearbeitenden Gebäude gehalten wird. Durch das erfindungsgemäße Verfahren bzw. den Einsatz der erfindungsgemäßen Steuervorrichtung wird somit beim Absenken von Schalungs- oder Schutzelementen bei der Bearbeitung von Gebäuden eine wesentliche Reduktion des Zeit- und Personalaufwandes erzielt.

Zur Erzielung eines weitgehend automatischen, effizienten Absenkverfahrens wird der Träger mittels eines Linearantriebselements, vorzugsweise mittels eines Hydraulikzylinders, gehoben und gesenkt, wobei das Linearantriebselement ein Verbindungselement aufweist, das in einer aktiven Stellung mit einem weiteren der Eingriffselemente des Trägers in Eingriff gebracht wird. Bei der Anwendung eines derartigen Linearantriebselements, welches vorzugsweise auch zum Heben bzw. zum nach oben Klettern der Schalungs- oder Schutzelemente zum Einsatz gebracht werden kann, ist es nicht erforderlich, externe Hebe- bzw. Absenkvorrichtungen, wie beispielsweise einen Kran, zum Einsatz zu bringen.

Um die Verbindung zwischen dem Linearantriebselement und einem Eingriffselement automatisch - d.h. ohne manuellen Zugriff - zu lösen, und somit zu ermöglichen, dass das Linearantriebselement mit einem weiter oben gelegenen Eingriffselement des Trägers in Eingriff gelangt, bevor der Träger samt Schalungs- oder Schutzelement nach unten abgesenkt wird, wird bevor das Linearantriebselement zum Absenken mit dem weiteren der Eingriffselemente verbunden wird, über das Linearantriebselement und die Steuervorrichtung Druck auf das Verbindungselement ausgeübt, so dass das Verbindungselement aus einer aktiven in eine inaktive Stellung bewegt wird.

Wenn vorteilhafterweise nach Lösen des Verbindungselements aus der Eingriffsstellung das Linearantriebselement ausgefahren wird und hierbei das Verbindungselement über die Steuervorrichtung wieder in eine aktive Stellung zurückbewegt wird, so dass das Verbindungselement mit einem weiteren Eingriffselement in die Eingriffstellung gelangt, kann ohne manuellen Zutun ein Lösen des Eingriffselements und eine neuerliche Verbindung mit dem Träger erzielt werden.

Wenn die Steuervorrichtung vor dem Heben bzw. Senken des Trägers mit dem Halteelement der Aufnahmeeinheit und dem Verbindungselement des Linearantriebs verbunden wird, kann mit einer einzigen Steuervorrichtung einerseits ein Lösen zwischen Halteelement und Aufnahmeeinheit bzw. ein Rückführen des Halteelements in eine aktive Stellung erfolgen; sogleich kann wiederum eine Verbindung zwischen Aufnahmeeinheit und einem zweiten Eingriffselement hergestellt werden. Ebenso kann mit dieser Steuervorrichtung ein Verbindungselement eines Linearantriebs aus einer Eingriffsstellung mit einem Eingriffselement des Trägers gelöst werden, um - nach dem Ausfahren des Linearantriebs - wieder eine Verbindung mit einem weiter oben gelegenen Eingriffselement des Trägers herzustellen, so dass beim Einfahren des Linearantriebs das Schalungs- oder Schutzelement sodann abgesenkt wird.

Die Zug-/Druckstange, welche insbesondere als Steuervorrichtung bei dem vorstehend genannten Verfahren eingesetzt werden kann, ist dadurch gekennzeichnet, dass zwei Stangenelemente in der Art einer Teleskopstange zueinander verschiebbar gelagert sind, wobei jedes Stangenelement endseitig einen Befestigungsteil aufweist, und zwischen den beiden Stangenelementen ein elastisches Element, vorzugsweise ein Federelement, insbesondere eine Spiralfeder, aufgenommen ist, so dass bei Annäherung der beiden Befestigungsteile gegenüber einer Grundstellung eine Druckkraft zwischen den beiden Stangenelementen wirkt und bei Entfernung der beiden Befestigungsteile zueinander eine Zugkraft zwischen den beiden Stangenelementen wirkt.

Um auf einfache automatische Weise das vorstehend genannte Verfahren - ohne manuellen Zugriff während des Hebens bzw. Senkens - durchführen zu können, ist es insbesondere erforderlich, dass während des Verfahrens des Trägers bzw. des Schutz- oder Schalungselements einerseits eine Zugkraft ausgeübt wird, um das Halteelement der Aufnahmeeinheit beim Bewegen des Trägers aus einer verriegelten Eingriffsstellung zu lösen und andererseits jedoch eine Druckkraft aufgebracht wird, um das Halteelement der Aufnahmeeinheit in eine aktive Stellung zurückzuführen. Diese beiden Anforderungen werden erfindungsgemäß auf konstruktiv einfache Weise durch die vorstehend genannte Ausgestaltung der Zug-/Druckstange erzielt.

Weiters ist es insbesondere vorteilhaft, wenn im Inneren der beiden Stangenelemente eine verschieblich gelagerte Übertragungsstange aufgenommen ist, wobei das elastische Element zwischen zwei Anlageteilen aufgenommen wird, von welchen ein erster Anlageteil an der Übertragungsstange befestigt ist. Mithilfe des zwischen den beiden Stangenelementen aufgenommenen elastischen Elements kann einerseits bei Ausfahren der beiden Stangenelemente zueinander eine Zugkraft, bei Annäherung der beiden Stangenelemente gegeneinander eine nach außen wirkende Druckkraft erzeugt werden.

Da grundsätzlich jedoch elastische Elemente häufig entweder für eine Zug- oder Druckbeanspruchung ausgelegt sind, ist es vorteilhaft, wenn mithilfe der Übertragungsstange sowohl für die Erzeugung der Druck- als auch der Zugkraft das elastische Element jeweils nur auf Druck oder Zug beansprucht wird. Demnach ist es günstig, wenn ein zweiter Anlageteil in der Grundstellung an einem inneren Absatz des äußeren Stangenelements anliegt, so dass das elastische Element in Abhängigkeit von der Position der Übertragungsstange auch beim Auseinanderfahren der beiden Stangenelemente mit Druck beaufschlagt werden kann.

Um beim Auseinanderziehen der beiden Stangenelemente mittels einer Druckbeanspruchung der Feder, einen zwischen den beiden Befestigungsteilen der Zug-/Druckstange wirkende Zugkraft zu entwickeln, ist es günstig, wenn die Übertragungsstange derart mit dem inneren Stangenelement verbunden ist, dass bei Entfernung der beiden Befestigungsteile zueinander die Übertragungsstange vom inneren Stangenelement mitgenommen wird. Ebenso wie mit dem erfindungsgemäßen Verfahren kann ein automatisches Herabklettern bzw. Absenken von Schalungs- oder Schutzelementen auch mit der erfindungsgemäßen Vorrichtung der eingangs angeführten Art erzielt werden, bei welcher eine Steuervorrichtung vorgesehen ist, die mit dem Halteelement der Aufnahmeeinheit, das in Eingriff mit einem ersten Eingriffselement des Trägers steht, verbunden ist, so dass bei Anheben des Trägers im Wesentlichen in vertikaler Richtung nach oben, das Halteelement in eine inaktive Stellung bewegt wird, in welcher Halte- und erstes Eingriffselement nicht in Eingriff miteinander stehen, und dass bei nachfolgendem Absenken des Trägers das Halteelement wiederum in eine aktive Stellung bewegt wird, in welcher das Halteelement mit einem zum Halten des Trägers in einer abgesenkten Stellung mit einem zweiten Eingriffselement in Eingriff gelangt.

Hinsichtlich der erfindungsgemäßen Ausgestaltung der Vorrichtung ist ein Linearantriebselement, vorzugsweise ein Hydraulikzylinder, zum Heben und Senken des Trägers vorgesehen, wobei das Linearantriebselement ein Verbindungselement aufweist, das in einer aktiven Stellung mit einem weiteren der Eingriffselemente des Trägers in Eingriff steht. Mithilfe des Linearantriebselements und der Steuervorrichtung ist es somit möglich, dass das Linearantriebselement zum Absenken mit dem weiteren der Eingriffselemente verbunden ist, wobei die Steuervorrichtung derart eingerichtet ist, dass sie zunächst das Verbindungselement aus einer Eingriffstellung mit dem Eingriffselement bewegt und beim Ausfahren des Linearantriebselements das Verbindungselement des Linearantriebselements in eine aktive Stellung zurückbewegt, so dass das Verbindungselement mit dem weiteren der Eingriffselemente in die Eingriffsstellung gelangt, so dass ein von manuellen Eingriffen freies automatisches Absenken des Trägers und des damit verbundenen Schutz- oder Schalungselements möglich ist.

Wenn die Steuervorrichtung mit dem Halteelement der Aufnahmeeinheit und dem Verbindungselement des Linearantriebelements verbunden ist, kann mit der Steuervorrichtung zugleich einerseits eine Verbindung zwischen dem Halteelement der Aufnahmeeinheit und dem Eingriffselement des Trägers zunächst gelöst und sodann wieder hergestellt werden und andererseits auch eine Verbindung zwischen dem Verbindungselement des Linearantriebselements und einem Eingriffselement des Trägers gelöst werden, bevor wieder eine Verbindung mit einem anderen Eingriffselement - ohne manuellen Zutun - hergestellt wird, so dass mithilfe der Vorrichtung ein automatisches Absenken des Trägers und des damit verbundenen Schutz- oder Schalungselements erzielt werden kann.

Insbesondere ist es mithilfe der erfindungsgemäßen Vorrichtung möglich, Halte- oder Verbindungselemente aus der Eingriffsstellung zu lösen bzw. in eine inaktive Stellung überzuführen und sodann wieder in eine aktive Stellung rückzuführen, wenn als Halte- und/oder Verbindungselement jeweils ein in einer Kulisse geführter Bolzen vorgesehen ist.

Die Erfindung wird nachstehend anhand von einem in den Zeichnungen dargestellten bevorzugten Ausführungsbeispiel, auf das sie jedoch keinesfalls beschränkt sein soll, noch näher erläutert.

Im Einzelnen zeigen in den Zeichnungen:
Fig. 1 eine Ansicht der erfindungsgemäßen Vorrichtung mit einer Steuervorrichtung und einem Hydraulikzylinder zum Heben und Senken in einer Ausgangsposition;
Fig. 2 eine Ansicht gemäß Fig. 1, wobei ein Kolben des Hydraulikzylinders gegenüber Fig. 1 eingefahren ist;
Fig. 3 eine Ansicht einer Zwischenstellung, bei welcher der Kolben des Hydraulikzylinders gegenüber Fig. 2 ausgefahren ist;
Fig. 4 eine Ansicht gemäß den vorstehenden Figuren, wobei der Kolben des Hydraulikzylinders ausgefahren ist, so dass ein Verbindungselement in einer Eingriffsstellung angeordnet ist;
Fig. 5 eine Ansicht gemäß den vorstehenden Figuren, wobei der Kolben des Hydraulikzylinders gegenüber Fig. 4 weiter ausgefahren ist, so dass die Steuervorrichtung ein Halteelement aus der Eingriffsstellung löst;
Fig. 6 eine Ansicht gemäß den vorstehenden Figuren, wobei der Träger gerade abgesenkt wird;
Fig. 7 eine Schnittansicht einer als Steuervorrichtung vorgesehenen Zug-/Druckstange in einer Grundposition;
Fig. 7a eine Ansicht gemäß Fig. 7, bei welcher endseitige Befestigungsteile der Zug-/Druckstange aneinander angenähert sind;
Fig. 7b eine Ansicht gemäß Fig. 7, wobei die Befestigungsteile der Zug-/Druckstange gegenüber der Grundposition voneinander entfernt angeordnet sind.

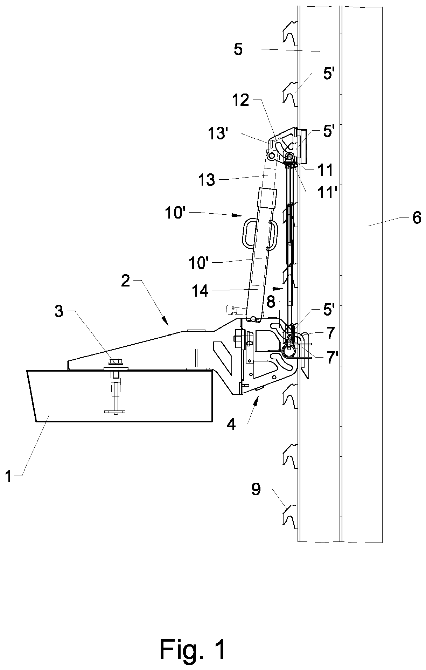

In Fig. 1 ist eine Decke 1 eines zu bearbeitenden Gebäudes gezeigt, an welcher eine Führungs- und Haltevorrichtung 2 mithilfe einer Schraube 3 befestigt ist. Die Führungs- und Haltevorrichtung 2 weist einen sog. Führungs- oder Kletterschuh als Aufnahmeeinheit 4 auf, in welcher ein Träger 5 eines Schalungs- oder Schutzelements 6 geführt und gehalten wird.

Der als Aufnahmeeinheit 4 gezeigte Führungsschuh ist im Detail in der WO 2007/141264 A1 beschrieben, wobei beim erfindungsgemäßen Verfahren bzw. der erfindungsgemäßen Vorrichtung selbstverständlich auch anders ausgestaltete Aufnahmeeinheiten 4 zum Einsatz gelangen können.

Bei der in Fig. 1 dargestellten Position befindet sich der als Halteelement 7 ausgebildete Bolzen 7' der Aufnahmeeinheit 4 in einer Eingriffsstellung mit einem hakenförmigen Eingriffselement 5' des Trägers 5.

Der Bolzen 7' ist bei dem gezeigten Ausführungsbeispiel in einer Kulisse 8 der Aufnahmeeinheit 4 verschieblich gelagert, wobei der Bolzen 7' aufgrund der Wirkung der Schwerkraft im nicht belasteten Zustand in einer unteren Normalposition angeordnet ist, in welcher ein Absenken des in der Aufnahmeeinheit 4 geführten Trägers 5 aufgrund eines formschlüssigen Eingriffs mit einem Eingriffselement 5' des Trägers 5 verhindert wird. Beim nach oben Klettern der Schalungs- oder Schutzelemente 6 hingegen wird der Bolzen 7' über die als schräge Auflauframpen ausgebildeten Rücken 9 der Eingriffelemente 5' in der Kulisse 8 nach oben in eine inaktive Stellung verschoben.

Weiters ist als Linearantriebselement 10 ein Hydraulikzylinder 10' gezeigt, welcher als Verbindungselement 11 zum Eingriff mit einem Eingriffselement 5' des Trägers 5 ebenfalls einen in einer Kulisse 12 verschieblich gelagerten Bolzen 11' aufweist. Die Kulisse 12 ist in einer Verbindungseinheit 13' ausgebildet, die gelenkig am Ende eines Kolbens 13 des Hydraulikzylinders 10' angeordnet ist. Der Hydraulikzylinder 10' ist hierbei - wie ersichtlich - gelenkig mit der Führungsvorrichtung 2 verbunden.

In der in Fig. 1 gezeigten Stellung befindet sich der als Verbindungselement 11 vorgesehene Bolzen 11' in einer Eingriffsstellung mit dem hakenförmigen Eingriffselement 5' des Trägers 5, wie dies üblicherweise am Ende einer Absenkbewegung der Fall ist.

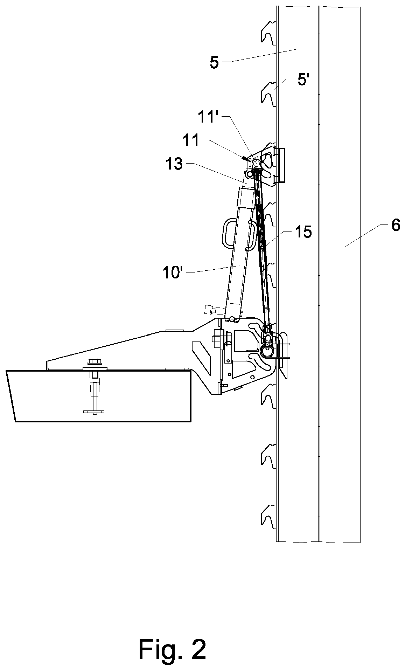

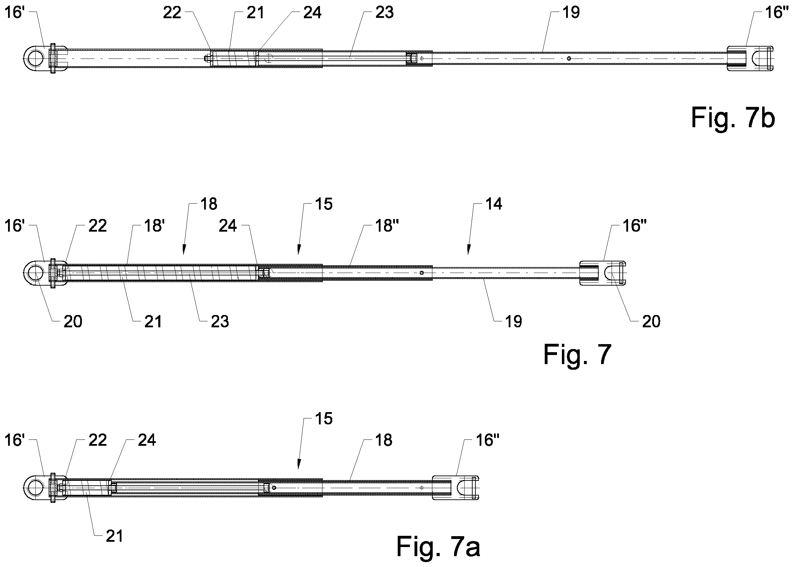

Um den Kolben 13 des Hydraulikzylinders 10' in einer ausgefahrenen Stellung mit dem Eingriffelement 5' des Trägers 5 in Verbindung zu bringen, um sodann auf einfache Weise ein Absenken des Trägers 5 beim Einfahren des Kolbens 13 erzielen zu können, wird zunächst der Kolben 13, wie in Fig. 2 gezeigt, ein wenig eingefahren, wobei im Zuge dieser Einfahrbewegung eine Steuervorrichtung 14 aktiv wird, die im gezeigten Ausführungsbeispiel als Zug- und Druckstange 15 ausgebildet ist. Durch das Einfahren des Kolbens 13 des Hydraulikzylinders 10' wird über die Zug-/Druckstange 15 eine Druckkraft auf den Bolzen 11' ausgeübt, so dass dieser in der Kulisse 12 nach oben und somit auch nach vorne in eine von dem hakenförmigen Element 5' beabstandete, inaktive Stellung gleitet. Hiefür weist die Zug-/Druckstange 15 endseitig zwei Befestigungsteile 16', 16" auf (vgl. Fig. 7), wobei der Befestigungsteil 16' mit dem Bolzens 11', der Befestigungsteil 16" mit dem Bolzen 7' verbunden ist.

In dieser inaktiven Stellung des als Verbindungselement 11 ausgebildeten Bolzens 11' kann der Kolben 13 des Hydraulikzylinders 10' sodann nach oben ausfahren, ohne mit einem Eingriffselement 5' des Trägers 5 in Eingriff zu gelangen und ohne dass hiefür manuelles Zutun erforderlich ist.

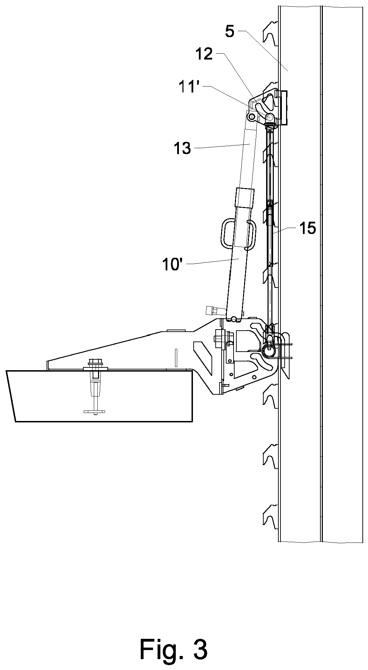

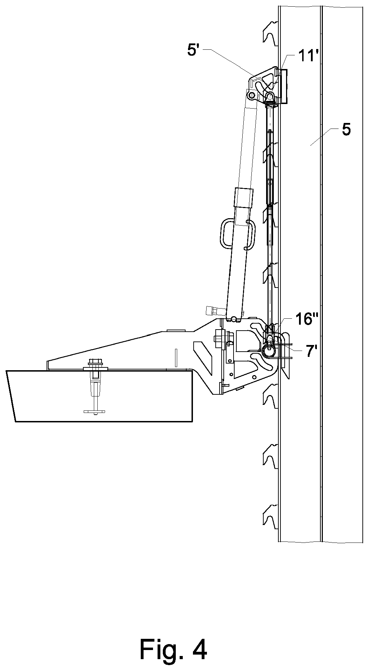

In der in Fig. 3 gezeigten Zwischenstellung ist sodann ersichtlich, dass mithilfe der Zug-/Druckstange 15 beim Ausfahren des Kolbens 13 des Hydraulikzylinders 10' der Bolzen 11' in der Kulisse 12 wieder nach unten bzw. nach innen geführt wird, d.h. in eine aktive Stellung gezogen wird, so dass beim weiteren Ausfahren des Kolbens 13, der Bolzen 11' in die in Fig. 4 gezeigte Eingriffsstellung mit einem oberen Eingriffselement 5' des Trägers 5 gelangt. In dieser Eingriffstellung wird der Träger 5 noch von dem unteren Halteelement 7 der Aufnahmeeinheit 4 getragen.

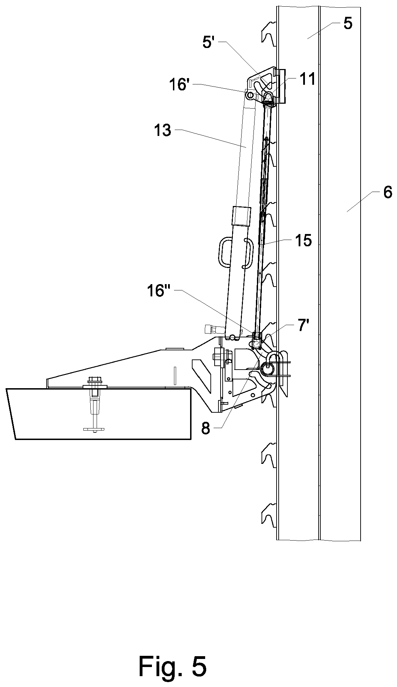

Wenn - wie in Fig. 5 ersichtlich - der Kolben 13 des Hydraulikzylinders 10' weiter ausgefahren wird, und somit die Last des Trägers 5 bzw. des Schutz- oder Schalungselements 6 vom Hydraulikzylinder 10' getragen wird, wird die formschlüssige Verbindung zwischen dem unteren Eingriffselement 5' und dem als Halteelement 7 vorgesehen Bolzen 7' gelöst und die Zug-/Druckstange 15 zieht den Bolzen 7' des als Aufnahmeeinheit 4 vorgesehenen Führungsschuhs in der Kulisse 8 nach oben, so dass - wie in Fig. 5 ersichtlich - der als Halteelement 7 vorgesehene Bolzen 7' - ohne manuellen Zutun - in einer inaktiven Stellung angeordnet ist.

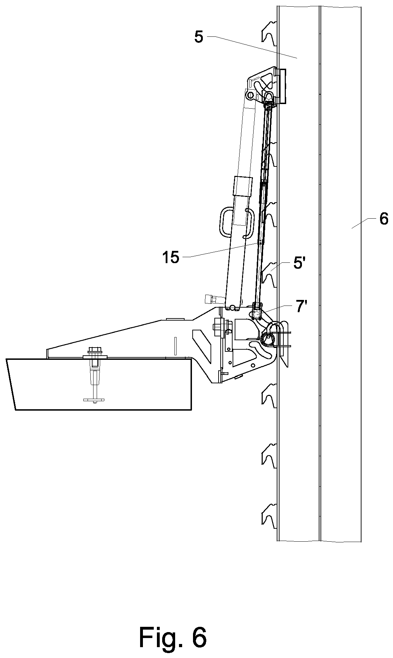

Wie in Fig. 6 ersichtlich, ist es in dieser inaktiven Stellung des Bolzens 7' möglich, den Träger 5 samt dem Schutz- oder Schalungselement 6 abzusenken. Während der Absenkbewegung wird - nachdem der Träger 5 über die Ausgangsposition absenkt wurde bzw. ein Eingriffselement 5' passiert wurde - der Bolzen 7' über die Zug-/Druckstange 15 wiederum in eine untere, nach innen verschobene Aktivstellung in der Kulisse 8 zurückgeführt. Beim weiteren Absenken des Trägers 5 gelangt demnach ein zuvor weiter oben angeordnetes zweites Eingriffselement 5' mit dem als Halteelement 7 vorgesehenen Bolzen 7' in Eingriff, wodurch der Träger 5 bzw. das Schalungs- oder Schutzelement 6 in einer abgesenkten Stellung gehalten wird.

Um bei dem vorstehend beschriebenen Verfahren die Position der als Halte- bzw. Verbindungselemente 7, 11 vorgesehenen Bolzen 7', 11' - entgegen der Schwerkraft - in Abhängigkeit von der Position des Kolbens 13 des Hydraulikzylinders 10' entsprechend zu steuern, ist einerseits die Aufbringung einer Druckkraft bei eingefahrenem Kolben 13 und andererseits die Ausübung einer Zugkraft bei ausgefahrener Hydraulik erforderlich.

Um diese Kräfte entsprechend aufbringen zu können, ist die als Steuervorrichtung 14 vorgesehene Zug-/Druckstange 15 im Detail wie folgt aufgebaut.

Wie in Fig. 7 ersichtlich, weist die Stange 15 zwei in der Art eines Teleskoparms ineinander angeordnete Stangenelemente 18, 19 auf, wobei das äußere Stangenelement 18 aus zwei fest miteinander verbundenen Teilen 18', 18" zusammengesetzt ist. An den beiden Endseiten ist jeweils der Befestigungsteil 16', 16" vorgesehen, wobei der jeweilige Befestigungsteil 16', 16" eine kreisrunde Durchgangsöffnung 20 aufweist, so dass auf einfache Weise eine formschlüssige Verbindung mit den Bolzen 7' und 11' herstellbar ist.

Im Inneren des äußeren Stangenelements 18 ist als elastisches Element eine Spiralfeder 21 aufgenommen, welche mit ihren Enden an einem Anlageteil 22, der von einer Übertragungsstange 23 getragen wird, und einem gegenüberliegenden Anlageteil 24 aufgenommen ist.

In der in Fig. 7 gezeigten Grundstellung ist die Feder 21 entspannt und die beiden beweglichen Teile, d.h. die beiden Stangenelemente 18 und 19 verharren in diesem Zustand ohne Krafteinwirkung.

Sofern die als Teleskopstange ausgeführte Zug-/Druckstange 15, wie in Fig. 7a gezeigt, zusammengeschoben wird, d.h. die beiden Befestigungsteile 16' 16" aneinander angenähert werden, schiebt das innere Stangenelement 19 den Anlageteil 24 an den Anlageteil 22 heran, so dass die Feder 21 aufgrund der Verkürzung des Wegs zwischen den beiden Anlageteilen 22, 24 zusammengedrückt wird und demnach danach trachtet, in ihre in Fig. 7 dargestellte Grundposition zurückzugelangen, wodurch über die Zug-/Druckstange 15 eine Druckkraft nach außen wirkt.

Sofern jedoch - wie in Fig. 7b ersichtlich - die Zug-/Druckstange 15 ausgefahren wird, d.h. die beiden Befestigungsteile 16', 16" voneinander entfernt werden, nimmt das innere Stangenelement 19 aufgrund einer formschlüssigen Verbindung die Übertragungsstange 23 mit, wodurch der Anlageteil 22 an den Anlageteil 24 herangeführt wird und somit die Feder 21 wiederum auf Druck beansprucht wird.

Da die Feder 21 auch in diesem Fall danach trachtet, wieder in ihre in Fig. 7 dargestellte Grundstellung zurückzugelangen, wird über die Zug-/Druckstange 15 nach außen eine Zugkraft ausgeübt, welche - wie vorstehend erläutert -, insbesondere dazu dient, das Halteelement 7 aus der aktiven Stellung in eine inaktive Stellung zu ziehen.

Die vorstehend beschriebene Zug-/Druckstange 15 kann demzufolge besonders vorteilhaft als Steuervorrichtung 14 für das in Zusammenhang mit den Fig. 1 bis 6 beschriebene Verfahren zum automatischen Absenken eines Schutz- oder Schalungselements 6 eingesetzt werden, so dass insbesondere gemeinsam mit dem gezeigten Hydraulikzylinder 10' ein Absenken ohne zeit- und personalaufwendige manuelle Eingriffe erfolgen kann.

## Patentansprüche

1. Verfahren zum Absenken eines Schalungs- oder Schutzelements (6) bei der Bearbeitung von Gebäuden, wobei das Schalungs- oder Schutzelement (6) über einen Träger (5) mit einer an einem Gebäudeteil befestigten Führungs- und Haltevorrichtung (2) verbunden ist, wobei der Träger (5) eine Vielzahl von in Längserstreckungsrichtung des Trägers (5) zueinander beabstandet angeordnete Eingriffselemente (5') und die Führungs- und Haltevorrichtung (2) eine Aufnahmeeinheit (4) mit einem Halteelement (7) aufweist, **dadurch gekennzeichnet, dass** der Träger (5) aus einer Ausgangsposition, in welcher das Halteelement (7) mit einem ersten Eingriffselement (5') des Trägers (5) in Eingriff steht, im Wesentlichen in vertikaler Richtung gehoben wird, wobei während des Hebens das Halteelement (7) mittels einer Steuervorrichtung (14) vorübergehend in eine inaktive Stellung bewegt wird, in welcher der Träger (5) über seine Ausgangsposition hinaus abgesenkt wird, und das Halteelement (7) sodann mittels der Steuervorrichtung (14) in eine aktive Stellung zurückbewegt wird, so dass beim Absenken des Trägers (5) ein zweites Eingriffselement (5') des Trägers (5) mit dem Halteelement (7) der Aufnahmeeinheit (4) in Eingriff gelangt, wobei der Träger (5) mittels eines Linearantriebselements (10), vorzugsweise mittels eines Hydraulikzylinders (10'), gehoben und gesenkt wird, wobei das Linearantriebselement (10) ein Verbindungselement (11) aufweist, das in einer aktiven Stellung mit einem weiteren der Eingriffselemente (5') des Trägers (5) in Eingriff gebracht wird, wobei bevor das Linearantriebselement (10) zum Absenken mit dem weiteren der Eingriffselemente (5') verbunden wird, über das Linearantriebselement (10) und die Steuervorrichtung (14) Druck auf das Verbindungselement (11) ausgeübt wird, so dass das Verbindungselement (11) aus einer aktiven in eine inaktive Stellung bewegt wird, in welcher das Verbindungselement (11) von einem dritten der Eingriffselemente (5'), welches sich unterhalb des weiteren und oberhalb des ersten und zweiten der Eingriffselemente (5') befindet, gelöst ist.

2. Verfahren nach Anspruch 1, **dadurch gekennzeichnet, dass** nach Lösen des Verbindungselements (11) aus der Eingriffstellung das Linearantriebselement (10) ausgefahren wird und hierbei das Verbindungselement (11) über die Steuervorrichtung (14) wieder in eine aktive Stellung zurückbewegt wird, so dass das Verbindungselement (11) mit dem weiteren Eingriffselement (5') in die Eingriffstellung gelangt.

3. Verfahren nach Anspruch 2, **dadurch gekennzeichnet, dass** die Steuervorrichtung (14) vor dem Heben bzw. Senken des Trägers (5) mit dem Halteelement (7) der Aufnahmeeinheit (4) und dem Verbindungselement (11) des Linearantriebelements (10) verbunden wird.

4. Verfahren nach einem der Ansprüche 1 bis 3, **dadurch gekennzeichnet, dass** als Steuervorrichtung (14) eine Zug-/Druckstange (15) verwendet wird, wobei zwei Stangenelemente (18, 19) in der Art einer Teleskopstange zueinander verschiebbar gelagert sind, wobei jedes Stangenelement (18, 19) endseitig einen Befestigungsteil (16', 16") aufweist, und zwischen den beiden Stangenelementen (18, 19) ein elastisches Element, vorzugsweise ein Federelement, insbesondere eine Spiralfeder (21), aufgenommen ist, so dass bei Annäherung der beiden Befestigungsteile (16', 16") gegenüber einer Grundstellung eine Druckkraft zwischen den beiden Stangenelementen (18, 19) wirkt und bei Entfernung der beiden Befestigungsteile (16', 16'') zueinander eine Zugkraft zwischen den beiden Stangenelementen (18, 19) wirkt.

5. Verfahren nach Anspruch 4, **dadurch gekennzeichnet, dass** im Inneren der beiden Stangenelemente (18, 19) eine verschieblich gelagerte Übertragungsstange (23) aufgenommen ist, wobei das elastische Element zwischen zwei Anlageteilen (22, 24) aufgenommen ist, von welchen ein erster Anlageteil (22) an der Übertragungsstange (23) befestigt ist.

6. Verfahren nach Anspruch 5, **dadurch gekennzeichnet, dass** ein zweiter Anlageteil (24) in der Grundstellung an einem inneren Absatz des äußeren Stangenelements (18) anliegt.

7. Verfahren nach Anspruch 6, **dadurch gekennzeichnet, dass** die Übertragungsstange (23) derart mit dem inneren Stangenelement (19) verbunden ist, so dass bei Entfernung der beiden Befestigungsteile (16', 16") zueinander die Übertragungsstange (23) vom inneren Stangenelement (19) mitgenommen wird.

8. Vorrichtung zum Absenken eines Schalungs- oder Schutzelements (6) bei der Bearbeitung von Gebäuden, mit einem Schalungs- oder Schutzelement (6), mit einem Träger (5) und mit einer an einem Gebäudeteil befestigbaren Führungs- und Haltevorrichtung (2), wobei das Schalungs- oder Schutzelement (6) über den Träger (5) mit der Führungs- und Haltevorrichtung (2) verbunden ist, wobei die Führungs- und Haltevorrichtung (2) eine Aufnahmeeinheit (4) mit einem Halteelement (7) aufweist, wobei der Träger (5) eine Vielzahl von in Längserstreckungsrichtung des Trägers (5) zueinander beabstandet angeordnete Eingriffselemente (5') zur Verbindung mit dem Halteelement (7) der Aufnahmeeinheit (4) aufweist, **dadurch gekennzeichnet, dass** eine Steuervorrichtung (14) vorgesehen ist, die mit dem Halteelement (7) der Aufnahmeeinheit (4), das in Eingriff mit einem ersten Eingriffselement (5') des Trägers (5) steht, verbunden ist, so dass bei Anheben des Trägers (5) im Wesentlichen in vertikaler Richtung nach oben, das Halteelement (7) in eine inaktive Stellung bewegt werden kann, in welcher Halte- und erstes Eingriffselement (7, 5') nicht in Eingriff miteinander stehen, und dass bei nachfolgendem Absenken des Trägers (5) das Halteelement (7) wiederum in eine aktive Stellung bewegt werden kann, in welcher das Halteelement (7) mit einem zum Halten des Trägers (5) in einer abgesenkten Stellung mit einem zweiten Eingriffselement (5') in Eingriff gelangt, wobei ein Linearantriebselement (10), vorzugsweise ein Hydraulikzylinder (10'), zum Heben und Senken des Trägers (5) vorgesehen ist, wobei das Linearantriebselement (10) ein Verbindungselement (11) aufweist, das in einer aktiven Stellung mit einem weiteren der Eingriffselemente (5') des Trägers (5) in Eingriff stehen kann wobei das Linearantriebselement (10) zum Absenken mit dem weiteren der Eingriffselemente (5') verbunden ist und die Steuervorrichtung (14) derart eingerichtet ist, dass sie beim Absenken des Trägers (5) das Verbindungselement (11) aus einer Eingriffstellung mit einem dritten Eingriffselement (5') , welches sich unterhalb des weiteren und oberhalb des ersten und zweiten der Eingriffselemente (5') befindet, bewegt und beim Ausfahren des Linearantriebselements (10) das Verbindungselement (11) in eine aktive Stellung zurückbewegt, so dass das Verbindungselement (11) mit dem weiteren der Eingriffselemente (5') in die Eingriffstellung gelangt.

9. Vorrichtung nach Anspruch 8, **dadurch gekennzeichnet, dass** die Steuervorrichtung (14) mit dem Halteelement (7) der Aufnahmeeinheit (4) und dem Verbindungselement (11) des Linearantriebelements (10) verbunden ist.

10. Vorrichtung nach Anspruch 8 oder 9, **dadurch gekennzeichnet, dass** als Halte- und/oder Verbindungselement (7, 11) jeweils ein in einer Kulisse (8, 12) geführter Bolzen (7', 11') vorgesehen ist.

11. Vorrichtung nach einem der Ansprüche 8 bis 10, **dadurch gekennzeichnet, dass** als Steuervorrichtung (14) eine Zug-/Druckstange (15) vorgesehen ist, wobei zwei Stangenelemente (18, 19) in der Art einer Teleskopstange zueinander verschiebbar gelagert sind, wobei jedes Stangenelement (18, 19) endseitig einen Befestigungsteil (16', 16") aufweist, und zwischen den beiden Stangenelementen (18, 19) ein elastisches Element, vorzugsweise ein Federelement, insbesondere eine Spiralfeder (21), aufgenommen ist, so dass bei Annäherung der beiden Befestigungsteile (16', 16") gegenüber einer Grundstellung eine Druckkraft zwischen den beiden Stangenelementen (18, 19) wirkt und bei Entfernung der beiden Befestigungsteile (16', 16'') zueinander eine Zugkraft zwischen den beiden Stangenelementen (18, 19) wirkt.

## Claims

1. Method for lowering a formwork or protective element (6) when working on buildings, wherein the formwork or protective element (6) is connected via a support (5) to a guiding and holding device (2) fastened to a part of the building, wherein the support (5) comprises a large number of engaging elements (5') arranged spaced apart from one another in the direction of the longitudinal extent of the support (5), and the guiding and holding device (2) comprises a receiving unit (4) having a holding element (7), **characterised in that** the support (5), from an initial position in which the holding element (7) is in engagement with a first engaging element (5') of the support (5), is raised substantially in the vertical direction, wherein, during the raising step, the holding element (7) is moved temporarily, by means of a control device (14), into an inactive position in which the support (5) is lowered beyond its initial position, and the holding element (7) is then moved, by means of the control device (14), back into an active position, so that, when the support (5) is lowered, a second engaging element (5') of the support (5) engages with the holding element (7) of the receiving unit (4), wherein the support (5) is raised and lowered by means of a linear drive element (10), preferably by means of a hydraulic cylinder (10'), wherein the linear drive element (10) comprises a connecting element (11) which, in an active position, is brought into engagement with another of the engaging elements (5') of the support (5), wherein, before the linear drive element (10) is connected to the other of the engaging elements (5') for the lowering step, pressure is applied via the linear drive element (10) and the control device (14) to the connecting element (11) so that the connecting element (11) is moved from an active to an inactive position in which the connecting element (11) is disengaged from a third engaging element (5') which is located below the other engaging element and above the first and second engaging elements (5').

2. Method according to claim 1, **characterised in that**, after the connecting element (11) has been released from the engaged position, the linear drive element (10) is extended and, in the process, the connecting element (11) is moved back into an active position via the control device (14), so that the connecting element (11) comes into an engaged position with the other engaging element (5').

3. Method according to claim 2, **characterised in that** the control device (14) is connected to the holding element (7) of the receiving unit (4) and the connecting element (11) of the linear drive element (10) before the support (5) is raised or lowered.

4. Method according to any of claims 1 to 3, **characterised in that** a push/pull rod (15) is used as the control device (14), wherein two rod elements (18, 19) are mounted in such a way that they can be displaced in relation to one another in the manner of a telescopic rod, wherein each rod element (18, 19) comprises a fastening part (16', 16") at the end, and a resilient element, preferably a spring element, in particular a spiral spring (21), is accommodated between the two rod elements (18, 19), so that, when the two fastening parts (16', 16") are brought closer together, a compressive force acts between the two rod elements (18, 19) relative to a basic position and, when the two fastening parts (16', 16") are moved away from one another, a tensile force acts between the two rod elements (18, 19).

5. Method according to claim 4, **characterised in that** a displaceably mounted transmission rod (23) is accommodated inside the two rod elements (18, 19), wherein the resilient element is accommodated between two bearing parts (22, 24), of which a first bearing part (22) is fastened to the transmission rod (23).

6. Method according to claim 5, **characterised in that** a second bearing part (24) rests against an inner shoulder of the outer rod element (18) in the basic position.

7. Method according to claim 6, **characterised in that** the transmission rod (23) is connected to the inner rod element (19) in such a way that when the two fastening parts (16', 16") are moved away from one another, the transmission rod (23) can be carried along by the inner rod element (19).

8. Device for lowering a formwork or protective element (6) when working on buildings, having a formwork or protective element (6), having a support (5) and having a guiding and holding device (2) that can be fastened to a part of a building, wherein the formwork or protective element (6) is connected to the guiding and holding device (2) via the support (5), wherein the guiding and holding device (2) comprises a receiving unit (4) having a holding element (7), wherein the support (5) comprises a large number of engaging elements (5') arranged spaced apart from one another in the longitudinal extension direction of the support (5) for connection to the holding element (7) of the receiving unit (4), **characterised in that** a control device (14) is provided which is connected to the holding element (7) of the receiving unit (4), which holding element is in engagement with a first engaging element (5') of the support (5), so that, when the support (5) is raised substantially in the vertical upward direction, the holding element (7) can be moved into an inactive position, in which the holding and first engaging elements (7, 5') are not in engagement with one another, and that, when the support (5) is subsequently lowered, the holding element (7) can again be moved into an active position, in which the holding element (7) comes into engagement with a second engaging element (5') for holding the support (5) in a lowered position, wherein a linear drive element (10), preferably a hydraulic cylinder (10'), is provided for raising and lowering the support (5), wherein the linear drive element (10) comprises a connecting element (11) which, in an active position, can engage another of the engaging elements (5') of the support (5), wherein the linear drive element (10) is connected to the other of the engaging elements (5') for lowering purposes, and the control device (14) is set up in such a way that, when the support (5) is lowered, the connecting element (11) moves out of an engagement position with a third engaging element (5'), which is located below the other engaging element and above the first and second engaging elements (5'), and, when the linear drive element (10) is extended, the connecting element (11) is moved back into an active position, so that the connecting element (11) comes into the engaged position with the other of the engaging elements (5').

9. Device according to claim 8, **characterised in that** the control device (14) is connected to the holding element (7) of the receiving unit (4) and the connecting element (11) of the linear drive element (10).

10. Device according to either claim 8 or claim 9, **characterised in that** a bolt (7', 11') guided in a link (8, 12) is provided as the holding and/or connecting element (7, 11).

11. Device according to any of claims 8 to 10, **characterised in that** a push/pull rod (15) is provided as the control device (14), wherein two rod elements (18, 19) are mounted in such a way that they can be displaced in relation to one another in the manner of a telescopic rod, wherein each rod element (18, 19) comprises a fastening part (16', 16") at the end, and a resilient element, preferably a spring element, in particular a spiral spring (21), is accommodated between the two rod elements (18, 19), so that, when the two fastening parts (16', 16") are brought closer together, a compressive force acts between the two rod elements (18, 19) relative to a basic position and, when the two fastening parts (16', 16") are moved away from one another, a tensile force acts between the two rod elements (18, 19).

## Revendications

1. Procédé pour abaisser un élément de coffrage ou de protection (6) lors de travaux sur des bâtiments, où l'élément de coffrage ou de protection (6) est relié par le biais d'un support (5) à un dispositif de guidage et de maintien (2) fixé à une partie d'un bâtiment, où le support (5) présente une pluralité d'éléments d'engagement (5') disposés à distance les uns des autres dans la direction d'extension longitudinale du support (5) et le dispositif de guidage et de maintien (2) présente une unité de réception (4) avec un élément de maintien (7), **caractérisé en ce que** le support (5) est soulevé sensiblement dans la direction verticale d'une position de départ dans laquelle l'élément de maintien (7) est en engagement avec un premier élément d'engagement (5'), où pendant le soulèvement l'élément de maintien (7) est temporairement déplacé au moyen d'un dispositif de commande (14) dans une position inactive dans laquelle le support (5) est abaissé au-delà de sa position de départ, et l'élément de maintien (7) est ensuite ramené dans une position active au moyen du dispositif de commande (14), de sorte que lorsque le support (5) est abaissé, un deuxième élément d'engagement (5') du support (5) parvient en engagement avec l'élément de maintien (7) de l'unité de réception (4), où le support (5) est soulevé et abaissé au moyen d'un élément d'entraînement linéaire (10), de préférence au moyen d'un vérin hydraulique (10'), où l'élément d'entraînement linéaire (10) présente un élément de liaison (11) qui, dans une position active, est amené en engagement avec un autre des éléments d'engagement (5') du support (5), où avant que l'élément d'entraînement linéaire (10) soit relié avec l'autre des éléments d'engagement (5') pour l'abaissement, une pression est exercée sur l'élément de liaison (11) par le biais de l'élément d'entraînement linéaire (10) et du dispositif de commande (14), de sorte que l'élément de liaison (11) est déplacé d'une position active dans une position inactive dans laquelle l'élément de liaison (11) est libéré d'un troisième des éléments d'engagement (5'), qui se trouve au-dessous de l'autre des éléments d'engagement (5') et au-dessus du premier et du deuxième des éléments d'engagement (5').

2. Procédé selon la revendication 1, **caractérisé en ce qu'**après la libération de l'élément de liaison (11) de la position d'engagement, l'élément d'entraînement linéaire (10) est déployé et l'élément de liaison (11) est alors ramené dans une position active par le biais du dispositif de commande (14), de sorte que l'élément de liaison (11) parvient dans la position d'engagement avec l'autre élément d'engagement (5').

3. Procédé selon la revendication 2, **caractérisé en ce que** le dispositif de commande (14), avant le soulèvement ou l'abaissement du support (5) est relié à l'élément de maintien (7) de l'unité de réception (4) et à l'élément de liaison (11) de l'élément d'entraînement linéaire (10).

4. Procédé selon l'une des revendications 1 à 3, **caractérisé en ce qu'**une tige de traction/compression (15) est utilisée comme dispositif de commande (14), où deux éléments de tige (18, 19) sont montés de manière à pouvoir se déplacer l'un par rapport à l'autre à la manière d'une tige télescopique, où chaque élément de tige (18, 19) présente une partie de fixation (16', 16") à l'extrémité, et un élément élastique, de préférence un élément de ressort, en particulier un ressort spiral (21), est logé entre les deux éléments de tige (18, 19), de sorte que lors du rapprochement des deux parties de fixation (16', 16") par rapport à une position de base, une force de compression agit entre les deux éléments de tige (18, 19) et lors de l'éloignement des deux parties de fixation (16', 16") l'une de l'autre, une force de traction agit entre les deux éléments de tige (18, 19).

5. Procédé selon la revendication 4, **caractérisé en ce qu'**à l'intérieur des deux éléments de tige (18, 19) est logée une tige de transmission (23) montée déplaçable, où l'élément élastique est logé entre deux parties de contact (22, 24) dont une première partie de contact (22) est fixée à la tige de transmission (23).

6. Procédé selon la revendication 5, **caractérisé en ce qu'**une deuxième partie de contact (24) repose dans la position de base sur un épaulement interne de l'élément de tige externe (18).

7. Procédé selon la revendication 6, **caractérisé en ce que** la tige de transmission (23) est reliée à l'élément de tige interne (19) de telle sorte que lors de l'éloignement des deux pièces de fixation (16', 16") l'une de l'autre, la tige de transmission (23) est entraînée de l'élément de tige interne (19).

8. Dispositif pour abaisser un élément de coffrage ou de protection (6) lors de travaux sur des bâtiments, avec un élément de coffrage ou de protection (6), avec un support (5) et avec un dispositif de guidage et de maintien (2) pouvant être fixé à une partie de bâtiment, où l'élément de coffrage ou de protection (6) est relié au dispositif de guidage et de maintien (2) par l'intermédiaire du support (5), où le dispositif de guidage et de maintien (2) présente une unité de réception (4) avec un élément de maintien (7), où le support (5) présente une pluralité d'éléments d'engagement (5') disposés à distance les uns des autres dans la direction d'extension longitudinale du support (5) pour la liaison à l'élément de maintien (7) de l'unité de réception (4), **caractérisé en ce qu'**un dispositif de commande (14) est prévu, qui est relié à l'élément de maintien (7) de l'unité de réception (4), est en engagement avec un premier élément d'engagement (5') du support (5), de sorte que lors du soulèvement du support (5) sensiblement dans la direction verticale vers le haut, l'élément de maintien (7) peut être déplacé dans une position inactive dans laquelle l'élément de maintien et le premier élément d'engagement (7, 5') ne sont pas en engagement l'un avec l'autre, et que lors de l'abaissement subséquent du support (5), l'élément de maintien (7) peut à nouveau être déplacé dans une position active dans laquelle l'élément de maintien (7) parvient en engagement avec un deuxième élément d'engagement (5') pour maintenir le support (5) dans une position abaissée, où un élément d'entraînement linéaire (10), de préférence un vérin hydraulique (10'), est prévu pour soulever et abaisser le support (5), où l'élément d'entraînement linéaire (10) présente un élément de liaison (11) qui, dans une position active, peut être en engagement avec un autre des éléments d'engagement (5') du support (5), où l'élément d'entraînement linéaire (10) est relié avec l'autre des éléments d'engagement (5') pour l'abaissement et le dispositif de commande (14) est agencé de telle sorte que lors de l'abaissement du support (5), il déplace l'élément de liaison (11) hors d'une position d'engagement avec un troisième élément d'engagement (5') qui se trouve au-dessous de l'autre et au-dessus du premier et du deuxième des éléments d'engagement (5'), et lors du déploiement de l'élément d'entraînement linéaire (10), l'élément de liaison (11) est ramené dans une position active, de sorte que l'élément de liaison (11) parvient dans la position d'engagement avec l'autre des éléments d'engagement (5').

9. Dispositif selon la revendication 8, **caractérisé en ce que** le dispositif de commande (14) est relié à l'élément de maintien (7) de l'unité de réception (4) et à l'élément de liaison (11) de l'élément d'entraînement linéaire (10).

10. Dispositif selon la revendication 8 ou 9, **caractérisé en ce qu'**un boulon (7', 11') guidé dans une coulisse (8, 12) est prévu comme élément de maintien et/ou de liaison (7, 11).

11. Dispositif selon l'une des revendications 8 à 10, **caractérisé en ce qu'**une tige de traction/compression (15) est prévue comme dispositif de commande (14), où deux éléments de tige (18, 19) sont montés déplaçables l'un par rapport à l'autre à la manière d'une tige télescopique, où chaque élément de tige (18, 19) présente une partie de fixation (16', 16") à l'extrémité, et un élément élastique, de préférence un élément à ressort, en particulier un ressort spiral (21), est logé entre les deux éléments de tige (18, 19), de sorte que lors du rapprochement des deux parties de fixation (16', 16") par rapport à une position de base, une force de compression agit entre les deux éléments de tige (18, 19) et lors de l'éloignement des deux parties de fixation (16', 16") l'une de l'autre, une force de traction agit entre les deux éléments de tige (18, 19).
